# EUROPEAN PATENT APPLICATION

(11) **EP 4 092 258 A1**
(43) Date of publication of application: **23.11.2022**
(21) Application number: 22168047.3
(22) Date of filing: 12.04.2022
(51) Int. Cl.: F02C 3/20

(54) **CONTROL SYSTEM FOR A FUEL CELL AND ENGINE COMBUSTOR ASSEMBLY**

(30) Priority: 17.05.2021 US 202117322507
(71) Applicant: General Electric Company, Schenectady, NY 12345 (US)
(72) Inventor: WANG, Honggang, Niskayuna, 12309 (US); JOSHI, Narendra D., Schenectady, 12303 (US); DE BOCK, Hendrik Pieter Jacobus, Clifton Park, 12065 (US); HART, Richard L., Niskayuna, 12309 (US)
(74) Representative: Openshaw & Co.

(57) **Abstract**

An engine assembly (100) includes a combustor (106), a fuel cell stack (108) fluidly connected to the combustor, the fuel cell stack being configured (i) to generate power using fuel and air directed into the fuel cell stack and (ii) to direct fuel and air exhaust from the fuel cell stack into the combustor, a compressor (104) fluidly connected upstream of (i) the combustor and (ii) the fuel cell stack, the compressor being configured to generate compressed air to direct into the fuel cell stack, a turbine (112) disposed downstream from the combustor, the turbine having a turbine inlet temperature, and a controller that is configured to control a power allocation between the fuel cell stack and the turbine based upon the turbine inlet temperature of the turbine. The combustor is configured to combust the fuel and air exhaust from the fuel cell stack into one or more gaseous combustion products that power the turbine.

## Description

### TECHNICAL FIELD

The present disclosure generally relates to power-generating systems, such as fuel cells and gas turbine engines. In particular, the present disclosure relates to a control system for a gas turbine engine having a combustion system and a fuel cell.

### BACKGROUND

Fuel efficiency of engines can be an important consideration in the selection and operation of engines. For example, fuel efficiency of gas turbine engines in aircraft can be an important (and a limiting) factor on how far the aircraft can travel. Current aircraft jet engines generally provide mostly shaft (e.g., mechanical) power that is converted into propulsion using a fan mounted shaft and a small amount of power generation. Some aircraft propulsion systems can, however, include fuel cells in addition to the gas turbine engines. These fuel cells can be located upstream of combustors and downstream from compressors of the gas turbine engines. Compressed air that is output by the compressors flows along the length of the engine and into the fuel cells. A portion of this air is consumed by the fuel cells in generating electrical energy. The rest of the air can flow through or around the fuel cells and into a combustor. This air is then mixed with fuel and combusted in a combustor of the engine.

### BRIEF SUMMARY

An engine assembly comprising: a combustor, a fuel cell stack fluidly connected to the combustor, the fuel cell stack being configured (i) to generate power using fuel and air directed into the fuel cell stack and (ii) to direct fuel and air exhaust from the fuel cell stack into the combustor, a compressor that is fluidly connected upstream of (i) the combustor and (ii) the fuel cell stack, wherein the compressor is configured to generate compressed air and to direct a portion of the compressed air into the fuel cell stack, a turbine disposed downstream from the combustor, the turbine having a turbine inlet temperature, wherein the combustor is configured to combust the fuel and air exhaust from the fuel cell stack into one or more gaseous combustion products that power the turbine, and a controller that is configured to control a power allocation between the fuel cell stack and the turbine based upon the turbine inlet temperature of the turbine.

An engine assembly comprising: a combustor, a fuel cell stack fluidly connected to the combustor, the fuel cell stack being configured (i) to generate power using fuel and air directed into the fuel cell stack and (ii) to direct fuel and air exhaust from the fuel cell stack into the combustor, a compressor that is fluidly connected upstream of (i) the combustor and (ii) the fuel cell stack, wherein the compressor is configured to generate compressed air and to direct a portion of the compressed air into the fuel cell stack, a turbine disposed downstream from the combustor, the turbine having a turbine inlet temperature, wherein the combustor is configured to combust the fuel and air exhaust from the fuel cell stack into one or more gaseous combustion products that power the turbine, and a controller that is configured to regulate a power output of the fuel cell stack based upon the turbine inlet temperature of the turbine.

A method of controlling an engine assembly, the method comprising: providing an engine assembly comprising a combustor, a fuel cell stack fluidly connected to the combustor, a compressor fluidly connected to the fuel cell stack, and a turbine, determining a turbine inlet temperature of the turbine, providing the determined turbine inlet temperature of the turbine to a controller, and controlling, via the controller, a power allocation between the fuel cell stack and the turbine based upon the turbine inlet temperature of the turbine.

Additional features, advantages, and embodiments of the present disclosure are set forth or apparent from consideration of the following detailed description, drawings, and claims. Moreover, it is to be understood that both the foregoing summary and the following detailed description are exemplary and intended to provide further explanation without limiting the scope of the disclosure as claimed.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 illustrates a gas turbine engine having a combustion system and a fuel cell according to one embodiment of the present disclosure.
FIG. 2 illustrates a gas turbine engine having a combination of a combustion system with an integrated fuel cell according to one embodiment of the present disclosure.
FIG. 3 illustrates a gas turbine engine having a combination of a combustion system with an integrated fuel cell according to one embodiment of the present disclosure.
FIG. 4 illustrates a combination of a combustion system with an integrated fuel cell according to an embodiment of the present disclosure.
FIG. 5 is a schematic of a gas turbine engine having a control system with a combustion system and a fuel cell according to one embodiment of the present disclosure.
FIG. 6 is a schematic of a control system for a gas turbine engine having a fuel cell according to an embodiment of the present disclosure.
FIG. 7 is a schematic of a control system for a fuel cell according to an embodiment of the present disclosure.
FIG. 8 illustrates a graph of the power output for an aircraft according to an embodiment of the present disclosure.

### DETAILED DESCRIPTION

Various embodiments are discussed in detail below. While specific embodiments are discussed, this is done for illustration purposes only. A person skilled in the relevant art will recognize that other components and configurations may be used without departing from the spirit and scope of the disclosure.

The present disclosure relates to a fuel cell and a combustor system for a gas turbine engine. One problem with known fuel cell and combustor combinations is the requirement of conduits to direct the flow of air into the fuel cells and out of the fuel cells into the combustor. These conduits can increase the size of the fuel cell and combustor combination for an engine. In addition, current aircraft jet engines generally provide mostly shaft (e.g., mechanical) power that is converted into propulsion using a fan mounted shaft and a small amount of power generation. Thus, for more efficient and reduced emissions for engines and/or flights, architectures and systems that provide direct current (DC) power generation on-board, such as, e.g., fuel cells, are needed, along with control systems to efficiently control the interaction of the fuel cell with the gas turbine engine. Thus, the present disclosure relates to a control system for a gas turbine engine having a combustion system and a fuel cell.

A fuel-cell is an electrochemical energy conversion device that has demonstrated potential in terms of higher efficiency and lower pollution in comparison to that of coal and/or diesel-based power generation systems. Common types of the fuel-cell include a polymer electrolyte membrane fuel-cell, a direct methanol fuel-cell, an alkaline fuel-cell, a phosphoric acid fuel-cell, a molten carbonate fuel-cell, and a solid oxide fuel-cell (SOFC). Fuel-cells, such as solid oxide fuel-cells (SOFCs) may operate in large-scale power generation systems to satisfy industrial and municipal needs. The fuel-cell typically includes an anode, a cathode, and an electrolyte disposed between the anode and the cathode. Typically, the fuel-cell generates electrical power based on a chemical reaction between hydrogen and steam received at the anode and oxygen/air received at the cathode. Various types of fuel calls can be used for embodiments of this disclosure. Examples include solid oxide fuel cells (SOFCs) and molten carbonate fuel cells (MCFC's). The fuel cell generates direct current (DC) electric power by electrochemically combining a fuel and an oxidant across an ionic conducting layer. The ionic conducting layer, i.e., an electrolyte, is a liquid or solid. In some embodiments, the fuel cell is positioned in electrical series in an assembly of cells, to produce power at useful voltages or currents. While many fuel cells fall within the scope of these inventive embodiments, the disclosure will emphasize details regarding SOFC devices, which are preferred for many end use applications.

One or more embodiments described herein provide fuel cell and combustor assemblies for engine systems, such as, e.g., gas turbine engines of aircraft (or other vehicles or stationary power-generating systems). The assemblies (and accompanying methods described herein) integrate fuel cells (e.g., solid oxide fuel cells (SOFCs)) and a combustor of an engine to provide electrical power and propulsion power in a thermally efficient manner. A fuel cell stack is arranged around the exterior of a combustor of the engine such that air flows radially inward through the fuel cells in the fuel cell stack, and into the combustor toward a center or annular axis of the combustor. The fuel cell stack can be integrated directly into the outer and/or inner liners of the combustor or combustion chamber such that no additional conduits or ducting is needed to fluidly couple the fuel cell stack with the combustor. In general, a solid oxide fuel cell consumes between 1% and 50% of the fuel energy in generating electricity. Traditional fuel cells keep the air and fuel sides of the fuel cell separate and recycle the fuel to maximize conversion of fuel in the fuel cycle. This requires a substantial Balance Of Plant (BOP) components such as heat exchangers, pumps, and plumbing, all of which can be eliminated by the integrated combustor and fuel cell of the present disclosure. For example, according to embodiments of this disclosure, unburned fuel and air from the solid oxide fuel cell are dumped directly into the gas turbine combustor and consumed.

According to one embodiment of the present disclosure, a control system (e.g., engine dispatch controller) is provided for a gas turbine engine having a combustion system and a fuel cell (e.g., solid oxide fuel cells (SOFC)) to adjust and/or to regulate subsystem parameters of the fuel cell, including, e.g., fuel utilization, oxygen-to-fuel ratio, fuel flowrate to the fuel cell, etc., in response to the inlet temperature of the turbine. According to an embodiment, the control system may adjust the fuel cell from at least a maximum power mode to a maximum efficiency mode depending upon the changing altitude of an aircraft.

According to one embodiment of the present disclosure, a combination of a combustion system with a fuel cell for a gas turbine engine is combined with a catalytic partial oxidation (C-POX) convertor for developing a hydrogen rich fuel stream for a solid oxide fuel cell that is (i) upstream of the gas turbine combustor and/or (ii) designed into the outer and/or inner liners of the gas turbine combustor. In operation, a pilot burner is used to start the gas turbine engine and to increase the operating temperature, pressure, and mass flow of air. Once the temperature, pressure, and mass air flow are sufficiently high, fuel is diverted to the catalytic partial oxidation convertor to facilitate the functioning of the solid oxide fuel cell located upstream of the combustor and/or within the combustor liner region. A hydrogen and carbon monoxide stream, which is developed in the catalytic partial oxidation convertor, is utilized in the solid oxide fuel cell to generate electrical power. Unburned fuel and air from the solid oxide fuel cell is channeled into the combustor where a main/pilot flame is present and provides ignition to consume any unburned hydrogen and carbon monoxide effluents from the solid oxide fuel cell. The heated air is then channeled into the gas turbine nozzle for work extraction by the turbine.

According to one embodiment, hydrogen (H₂) fuel can be used as one of the fuel sources with the gas turbine engine having a combustion system and a fuel cell, as opposed to (or in addition to) a hydrocarbon fuel source. According to this embodiment, a catalytic partial oxidation (C-POX) convertor may not be necessary for this hydrogen (H₂) fuel source, and, thus, the hydrogen (H₂) fuel stream can be directed into the fuel cell (e.g., SOFC) that is located upstream of the combustor and/or integrated into the outer and/or inner liners of the gas turbine combustor.

According to one embodiment, various fuel sources can be used with the proposed engine system, including the gas turbine engine having a combustion system and a fuel cell. Non-limiting examples of fuel sources for the engine system include, e.g., kerosene fuels, such as Jet A, JP-8,and JP-5 and synthetic analogues, Syntroleum, bio-jet fuels, synthetic gasoline, biodiesel, methanol, dimethyl ether (DME), ethanol, glycerol, formic acid, ammonia, hydrazine hydrate, liquid hydrogen, compressed hydrogen, and combinations thereof.

According to one embodiment, a pre-burner system and/or a heat exchanger can also be included to increase the temperature of a portion of air coming from a compressor to a certain temperature (e.g., 600 to 800°C) to further facilitate the functioning of the solid oxide fuel cell located upstream of the combustor and/or within the combustor liner region. For example, once the temperature, pressure, and mass air flow are sufficiently high, a portion of fuel can be diverted to the pre-burner system to increase the temperature of the portion of air coming from the compressor. The air heated by the pre-burner system, along with the hydrogen and carbon monoxide stream described above, which is developed in the catalytic partial oxidation convertor, and/or the hydrogen (H₂) fuel stream, is utilized in the solid oxide fuel cell to generate electrical power in the form of, e.g., direct current (DC) power.

The fuel cell and combustor assemblies described herein can be used to generate electrical power for the creation of thrust in addition to that provided by engine exhaust. For example, the draw of electrical current from the fuel cell stack in a gas turbine engine can be used to power one or more motors that add torque to a fan of the gas turbine engine. This increases overall fuel efficiency of a propulsion system that includes the fuel cells and combustors. For example, there is potential for at least a 10% or more reduction in fuel burn to complete a flight via, e.g., an aircraft engine having the fuel cell and combustor assemblies described herein.

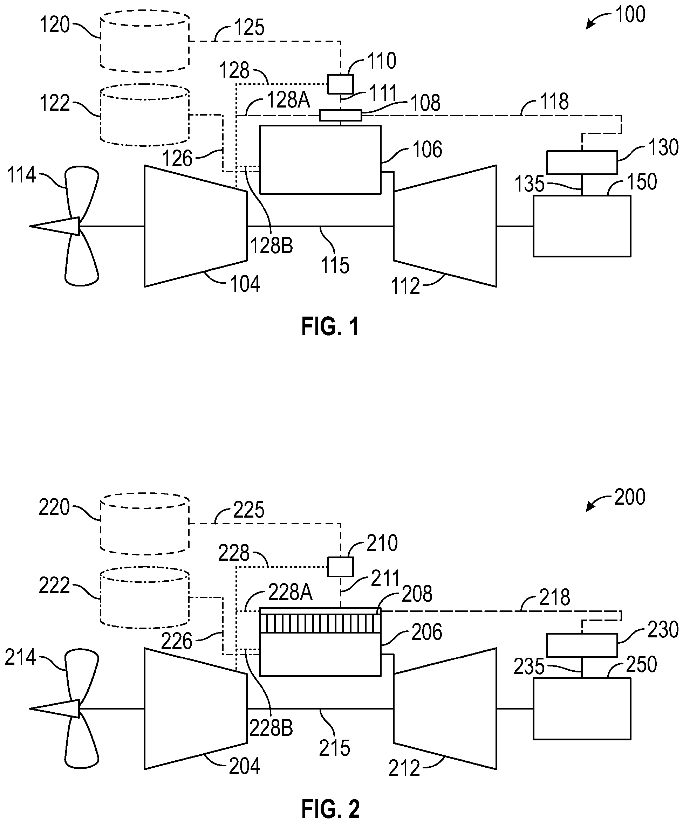

FIG. 1 illustrates a gas turbine engine 100 having a combustion system and a fuel cell according to one embodiment of the present disclosure. As shown in FIG. 1, the gas turbine engine 100 includes a shaft 115 that mechanically connects at least one compressor 104 to a turbine 112. The gas turbine engine 100 further includes a combustor 106 (e.g., a gas turbine combustor) and a fuel cell 108 (or fuel cell stack) having a plurality of fuel cells (e.g., SOFCs) upstream of the combustor 106.

As further shown in FIG. 1, the gas turbine engine 100 also includes a catalytic partial oxidation (C-POX) convertor 110 for developing a hydrogen rich fuel stream (see, e.g., fuel stream 111) for fuel cell 108 (e.g., solid oxide fuel cell) that is upstream of the combustor 106. The engine 100 further includes a fuel source 120 (e.g., a hydrocarbon fuel source, including, e.g., a carbon-neutral fuel or synthetic hydrocarbons) for directing a fuel stream 125 into the C-POX convertor 110 for developing a hydrogen rich fuel stream 111. The hydrogen rich fuel stream 111 is then directed into the fuel cell 108 located upstream of the combustor 106. According to another embodiment, the fuel source 120 could be a hydrogen (H₂) fuel source, as opposed to a hydrocarbon fuel source. According to this embodiment, the C-POX convertor 110 may not be necessary for this hydrogen (H₂) fuel source, and, thus, the hydrogen (H₂) fuel stream (e.g., fuel stream 125) can sent directly into the fuel cell 108 (e.g., SOFC) that is located upstream of the combustor 106.

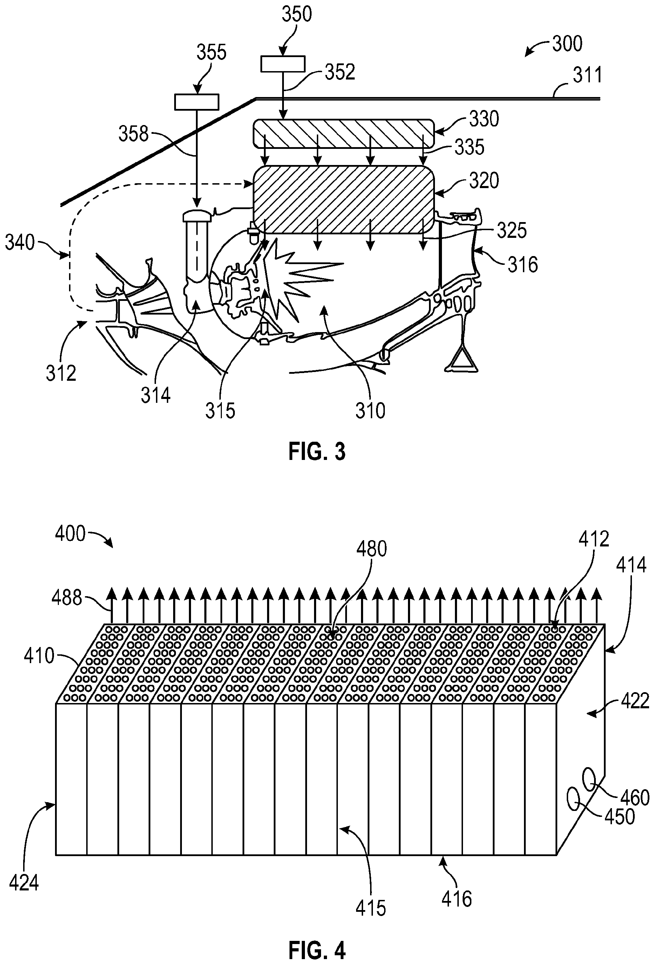

The gas turbine engine 100 of FIG. 1 also includes a secondary fuel source 122 (e.g., a hydrocarbon fuel source, including, e.g., a carbon-neutral fuel or synthetic hydrocarbons, such as, e.g., synthetic fuel (i.e., synfuel), which is made from coal, corn, etc., as a substitute for a petroleum product). A fuel stream 126 from this secondary fuel source 122 can be directed into the combustor 106 through a main/pilot fuel nozzle (see, e.g., FIG. 3) and/or to aid in developing a combustion product within the combustor 106. According to one embodiment, the combustor 106 includes one or more main/pilot fuel nozzles and/or injectors (see, e.g., FIG. 3) with a mixer and/or swirler (not shown) that can aid in at least partially mixing air and fuel to facilitate combustion of fuel and air, the main/pilot flames being configured to combust the fuel directed into the combustor from the fuel cell stack into the one or more gaseous combustion products. Although the embodiment of FIG. 1 illustrates the gas turbine engine 100 having a secondary fuel source 122, the engine 100 could alternatively not include a secondary fuel source (e.g., secondary fuel source 122). Thus, according to this embodiment, a secondary fuel stream (not shown) can be directed into the combustor 106 from the fuel source 120 to run a main/pilot flame (see, e.g., FIG. 3) within the combustor 106 and/or to aid in developing a combustion product within the combustor 106.

As further shown in FIG. 1, the compressor 104 of the gas turbine engine 100 receives inlet air (not shown) and compresses this air via one or more stages of rotating blades. The compressed air 128 is then directed into the C-POX convertor 110 for developing a hydrogen rich fuel stream (see, e.g., fuel stream 111) for the fuel cell 108 (e.g., solid oxide fuel cell) that is located upstream of the combustor 106. Portions of the compressed air 128, i.e., portion 128A and portion 128B, are also directed into the fuel cell 108 and the combustor 106, respectively, to facilitate the functioning of the fuel cell 108 and the combustor 106.

In the embodiment of FIG. 1, the fuel cell 108 that is located upstream of the combustor 106 converts the fuel stream 111 and compressed air 128A sent into the fuel cell 108 into electrical energy 118 (e.g., DC current). This electrical energy or DC current 118 is directed into an AC/DC convertor 130 in order to change the DC current 118 into AC current 135 that can be effectively utilized by one or more subsystems 150, such as, e.g., a generator, a fan, or other electrical machine. In addition, partially oxidized fuel and air exhaust from the fuel cell 108 can be directed into the combustor 106. The partially consumed fuel and air exhaust from the fuel cell 108, additional air (e.g., compressed air 128B) from the compressor 104, and/or additional fuel from one or more fuel injectors (e.g., fuel stream 126 from secondary fuel source 122) are combusted within the combustor 106. Exhaust from the combusted fuel and air mixture is then directed into the turbine 112, which converts the exhaust into energy via the rotating shaft 115 that can be used to power one or more loads 114, such as a fan used to propel a vehicle (e.g., an aircraft), a generator, or the like. According to one embodiment, the shaft 115 is a single shaft that connects the fan 114 to the compressor 104 and the turbine 112. According to another embodiment, the shaft 115 comprises (i) an outer shaft that connects the compressor 104 to the turbine 112, and (ii) an inner shaft that connects the fan 114 to the turbine 112. Although the embodiment of FIG. 1 illustrates a fan 114 being mechanically connected to the turbine 112 via the shaft 115, this fan 114 could be alternatively omitted from the gas turbine engine 100.

FIG. 2 illustrates a gas turbine engine 200 having a combustion system and a fuel cell according to another embodiment of the present disclosure. Similar to the embodiment of FIG. 1, as shown in FIG. 2, the gas turbine engine 200 includes a shaft 215 that mechanically connects at least one compressor 204 to a turbine 212. The gas turbine engine 200 further includes a combustor 206 (e.g., a gas turbine combustor), and a fuel cell 208 (or fuel cell stack) having a plurality of fuel cells (e.g., SOFCs) integrated with the combustor 206. According to one embodiment, the fuel cell 208 (e.g., solid oxide fuel cell) is integrated into the outer and/or inner liners of the combustor 206. For example, according to one embodiment, the fuel cell 208 could be integrated into the combustor 206 according to the embodiments described in, for example, US 2019/0136761 A1, which is incorporated by reference herein in its entirety. Alternatively, according to another embodiment, the fuel cell 208 could comprise a system with a housing (see, e.g., system 400 with housing 410 illustrated in FIG. 4, which is described in further detail below), which is then integrated into the outer and/or inner liners of the combustor 206. The fuel cell 208 can also be integrated into the outer and/or inner liners of the combustor 206 in another manner. For example, the exhaust stream from the fuel cell stack can be manifolded directly into the outer and/or inner liners of the combustor 206. Alternatively, part of the fuel cell stack and the combustor liners can be integrated via an additively manufacturing method (e.g., 3-D printing).

As further shown in FIG. 2, the gas turbine engine 200 also includes a catalytic partial oxidation (C-POX) convertor 210 for developing a hydrogen rich fuel stream (see, e.g., fuel stream 211) for fuel cell 208 (e.g., solid oxide fuel cell) that is integrated into the outer and/or inner liners of the combustor 206. The engine 200 further includes a fuel source 220 (e.g., a hydrocarbon fuel source, including, e.g., a carbon-neutral fuel or synthetic hydrocarbons) for directing a fuel stream 225 into the C-POX convertor 210 for developing a hydrogen rich fuel stream 211. The hydrogen rich fuel stream 211 is then directed into the fuel cell 208 located in a liner region of the combustor 206. According to another embodiment, the fuel source 220 could be a hydrogen (H₂) fuel source, as opposed to a hydrocarbon fuel source. According to this embodiment, the C-POX convertor 210 may not be necessary for this hydrogen (H₂) fuel source, and, thus, the hydrogen (H₂) fuel stream (e.g., fuel stream 225) can sent directly into the fuel cell 208 (e.g., SOFC) that is integrated into the outer and/or inner liners of the combustor 206.

The gas turbine engine 200 of FIG. 2 also includes a secondary fuel source 222 (e.g., a hydrocarbon fuel source, including, e.g., a carbon-neutral fuel or synthetic hydrocarbons, such as, e.g., synthetic fuel (i.e., synfuel), which is made from coal, corn, etc., as a substitute for a petroleum product). A fuel stream 226 from this secondary fuel source 222 can be directed into the combustor 206 through a main/pilot fuel nozzle (see, e.g., FIG. 3) and/or to aid in developing a combustion product within the combustor 206. According to one embodiment, the combustor 206 includes one or more main/pilot fuel nozzles and/or injectors (see, e.g., FIG. 3) with a mixer and/or swirler (not shown) that can aid in at least partially mixing air and fuel to facilitate combustion of fuel and air, the main/pilot flames being configured to combust the fuel directed into the combustor from the fuel cell stack into the one or more gaseous combustion products. Although the embodiment of FIG. 2 illustrates the gas turbine engine 200 having a secondary fuel source 222, the engine 200 could alternatively not include a secondary fuel source (e.g., secondary fuel source 222). Thus, according to this embodiment, a secondary fuel stream (not shown) can be directed into the combustor 206 from the fuel source 220 to run a main/pilot flame (see, e.g., FIG. 3) within the combustor 206 and/or to aid in developing a combustion product within the combustor 206.

As further shown in FIG. 2, the compressor 204 of the gas turbine engine 200 receives inlet air (not shown) and compresses this air via one or more stages of rotating blades. The compressed air 228 is then directed into the C-POX convertor 210 for developing a hydrogen rich fuel stream (see, e.g., fuel stream 211) for the fuel cell 208 (e.g., solid oxide fuel cell) that is integrated into the outer and/or inner liners of the combustor 206. Portions of the compressed air 228, i.e., portion 228A and portion 228B, are also directed into the fuel cell 208 and the combustor 206, respectively, to facilitate the functioning of the fuel cell 208 and the combustor 206.

In the embodiment of FIG. 2, the fuel cell 208 that is integrated into the outer and/or inner liners of the combustor 206 converts the fuel stream 211 and air 228A sent into the fuel cell 208 into electrical energy 218 (e.g., DC current). This electrical energy or DC current 218 is directed into an AC/DC convertor 230 in order to change the DC current 218 into AC current 235 that can be effectively utilized by one or more subsystems 250, such as, e.g., a generator, a fan, or other electrical machine. In addition, partially oxidized fuel and air exhaust from the fuel cell 208 flow radially inward into the combustor 206. The partially consumed fuel and air exhaust from the fuel cell 208, additional air (e.g., compressed air 228B) from the compressor 204, and/or additional fuel from one or more fuel injectors (e.g., fuel stream 226 from secondary fuel source 222) are combusted within the combustor 206. Exhaust from the combusted fuel and air mixture is then directed into the turbine 212, which converts the exhaust into energy via the rotating shaft 215 that can be used to power one or more loads 214, such as a fan used to propel a vehicle (e.g., an aircraft), a generator, or the like. According to one embodiment, the shaft 215 is a single shaft that connects the fan 214 to the compressor 204 and the turbine 212. According to another embodiment, the shaft 215 comprises (i) an outer shaft that connects the compressor 204 to the turbine 212, and (ii) an inner shaft that connects the fan 214 to the turbine 212. Although the embodiment of FIG. 2 illustrates a fan 214 being mechanically connected to the turbine 212 via the shaft 215, this fan 214 could be alternatively omitted from the gas turbine engine 200.

FIG. 3 illustrates a gas turbine engine 300 having a combination of a combustion system with an integrated fuel cell according to one embodiment of the present disclosure. As shown in FIG. 3, the gas turbine engine 300 includes an engine case 311 that encases a compressor 312, a combustor 310 (e.g., a gas turbine combustor), and a fuel cell 320 and/or a fuel cell stack having a plurality of fuel cells (e.g., SOFCs) integrated with the combustor 310. According to one embodiment, the fuel cell 320 (e.g., solid oxide fuel cell) is located upstream of the combustor 310 (see, e.g., FIG. 1). According to another embodiment, the fuel cell 320 (e.g., solid oxide fuel cell) is designed into the outer and/or inner liners of the combustor 310. For example, according to one embodiment, the fuel cell 320 could be integrated into the combustor 310 according to the embodiments described in, for example, US 2019/0136761 A1, which is incorporated by reference herein in its entirety. Alternatively, according to another embodiment, the fuel cell 320 could comprise a system with a housing (see, e.g., system 400 with housing 410 illustrated in FIG. 4, which is described in further detail below), which is then integrated into the outer and/or inner liners of the combustor 310. The fuel cell 320 can also be integrated into the outer and/or inner liners of the combustor 310 in another manner.

As shown in FIG. 3, the engine 300 further includes a primary fuel source 350, a secondary fuel source 355, and a catalytic partial oxidation convertor (C-POX) 330. According to one embodiment, a portion of fuel 352 from the primary fuel source 350 is directed to the catalytic partial oxidation convertor 330 for developing a hydrogen rich fuel stream 335 to be fed into the fuel cell 320, while a portion of fuel 358 from the secondary fuel source 355 is directed into a fuel nozzle 314 for the operation of a pilot/main burner 315 of the combustor 310. During operation, the pilot/main burner 315 is used to start the engine 300 and to increase the operating temperature, pressure, and mass flow of air. Once the engine 300 is sufficiently high in temperature, pressure, and mass flow of air, the portion of fuel 352 is diverted from the primary fuel source 350 to the catalytic partial oxidation convertor 330 to develop a hydrogen rich fuel stream 335. The hydrogen rich fuel stream 335 (i.e., a hydrogen and carbon monoxide stream) that is developed in the catalytic partial oxidation convertor 330 is utilized along with inlet air 340 that is directed into the fuel cell 320 from the compressor 312 to generate electrical power. Unburned fuel and air 325 from the fuel cell 320 is channeled into the combustor 310 where a pilot/main flame from the pilot/main burner 315 is present and provides ignition to consume the unburned fuel and air 325 (e.g., hydrogen and carbon monoxide effluents) from the fuel cell 320. According to one embodiment, the exhausted fuel and air 325 from the fuel cell 320 (e.g., SOFC) is consumed in the combustor 310 like a micromixer burner. The heated air (e.g., exhaust) is then channeled into a gas turbine nozzle 316 for work extraction by the turbine (see, e.g., turbine 112 of the gas turbine engine 100 of the embodiment of FIG. 1 and/or turbine 212 of the gas turbine engine 200 of the embodiment of FIG. 2). According to another embodiment, one or more pilot/main fuel nozzles (e.g., pilot/main burner 315) and/or injectors with a mixer and/or swirler are included within the combustor 310 that can aid in at least partially mixing air and fuel to facilitate combustion of fuel and air, the main/pilot flames being configured to combust the fuel directed into the combustor 310 from the fuel cell 320 (or fuel cell stack) into the one or more gaseous combustion products.

According to another embodiment, the primary fuel source 350 can comprise a hydrogen (H₂) fuel, as opposed to (or in addition to) a hydrocarbon fuel source. According to this embodiment, the catalytic partial oxidation (C-POX) convertor 330 may not be necessary for this hydrogen (H₂) fuel source, and, thus, the hydrogen (H₂) fuel stream (e.g., portion of 352) can be sent directly into the fuel cell 320 (e.g., SOFC) that is designed into the outer and/or inner liners of the combustor 310. According to one embodiment, when hydrogen (H₂) fuel is the primary fuel source 350, a heat-exchanger (not shown), a pre-burner system (not shown), and/or a C-POX convertor (e.g., C-POX convertor 330) can be included to control the temperature of the hydrogen (H₂) fuel to an operating point of the fuel cell 320 (e.g., SOFC) and/or up to 200°C less or up to 200°C more than the operating point of the fuel cell 320 (e.g., SOFC).

According to another embodiment, the secondary fuel source 355 of the embodiment of FIG. 3 could be omitted. According to this embodiment, the portion of fuel 352 is directed from the primary fuel source 350 to the catalytic partial oxidation convertor 330 for developing a hydrogen rich fuel stream 335 to be fed into the fuel cell 320, while another portion of fuel (not shown) could be directed from the primary fuel source 350 into the fuel nozzle 314 for the operation of a pilot/main burner 315 of the combustor 310.

According to one embodiment of the present disclosure, by incorporating or integrating the fuel cell 320 (e.g., SOFC) along the combustor liner of the combustor 310 for a gas turbine engine 300 (e.g., an aircraft engine), in which a compressor 312 is connected upstream to the combustor 310 and a turbine (not shown) is connected downstream to the combustor 310, both air and fuel can be directed to the fuel cell 320 (SOFC) in a single pass, meaning there is no recycling of the unburned fuel or air from the fuel cell exhaust to the inlet of the fuel cell 320. Thus, there is no need for a separate air supply in this configuration. However, because the inlet air 340 for the fuel cell 320 (e.g., SOFC) comes solely from the upstream engine compressor 312 without any other separately controlled air source, the inlet air 340 for the fuel cell 320 that is discharged from the compressor 312 is subject to the air temperature changes that occur at different flight stages. For example, the air within the aircraft engine compressor may work at 200°C during idle, 600°C during take-off, 450°C during cruise, etc. This type of temperature change to the inlet air 340 directed to the fuel cell 320 may lead to significant thermal transient issues (or even thermal shock) to the ceramic materials of the fuel cell 320 (e.g., SOFC), which could range from cracking to failure. Thus, according to embodiments of the present disclosure, a heat exchanger and/or a pre-burner system (not shown) can be fluidly coupled to (i) the engine compressor 312 (at an upstream side to the heat exchanger and/or pre-burner system) and (ii) the fuel cell 320 (e.g., SOFC) (at a downstream side to the heat exchanger and/or pre-burner system). This heat exchanger and/or pre-burner system can serve as a control means or system to maintain the inlet air 340 being directed into the fuel cell 320 at a temperature at a desired range (e.g., 600°C to 800°C ±200°C).

FIG. 4 illustrates a perspective view of another embodiment of a combination of a combustion system with an integrated fuel cell (i.e., a fuel cell and combustor system 400) that can be used in a gas turbine engine system (e.g., gas turbine engine 200 of FIG. 2 and/or gas turbine engine 300 of FIG. 3), which is further described in, e.g., US 2020/0194799 A1, which is incorporated by reference herein in its entirety. The system 400 includes a housing 410 having a combustion outlet side 412 and a side 416 that is opposite to the combustion outlet side 412, a fuel and air inlet side 422 and a side 424 that is opposite to the fuel and air inlet side 422, and sides 414, 415. The sides 414 and 416 are not visible in the perspective view of FIG. 4. The shape of the housing 410 may differ from what is shown in FIG. 4. For example, the housing 410 need not have a rectangular or a cubic shape, in another embodiment.

The outlet side 412 includes several combustion outlets 480 from which combustion gas(es) 488 is directed out of the housing 410. As described herein, the combustion gas 488 can be created using fuel and air that is not consumed by fuel cells in a fuel cell stack inside the housing 410. This combustion gas 488 can be used to generate propulsion or thrust for a vehicle, such as a manned or an unmanned aircraft.

The inlet side 422 includes one or more fuel inlets 450 and one or more air inlets 460. Optionally, one or more of the inlets 450, 460 can be on another side of the housing 410. The fuel inlet 450 is fluidly coupled with a source of fuel for the fuel cells, such as one or more pressurized containers of a hydrogen-containing gas and/or a catalytic partial oxidation convertor as described above. Alternatively, another type or source of fuel may be used. The air inlet 460 is fluidly coupled with a source of air for the fuel cells, such as air that is discharged from a compressor provided with a gas turbine engine (see, e.g., inlet air 340 coming from compressor 312 in the gas turbine engine system 300 of the embodiment of FIG. 3). Alternatively, another source of air may be provided, such as, e.g., one or more pressurized containers of oxygen gas. The inlets 450, 460 separately receive the fuel and air from the external sources of fuel and air, and separately direct the fuel and air into the fuel cells.

In one embodiment, the inlet side 422 and the outlet side 412 may be the only sides of the housing 410 that are not sealed. For example, the housing 410 may be sealed to prevent ingress or egress of fluids (gas and/or liquid) into and out of the housing 410, but for the fuel and air inlets 450, 460 and the combustion outlets 480. The air and fuel that are directed into the housing 410 via the inlets 450, 460 may be entirely or substantially consumed (e.g., at least 98% of the volume or mass is consumed) by the fuel cells inside the housing 410 and/or the generation of combustion gas 488. This can allow for the housing 410 to have no other outlet through which any fuel or air passes aside from the combustion outlets 480 through which the combustion gas 488 exits the housing 410. According to one embodiment, partially oxidized fuel and unused air from the fuel cells inside the housing 410 can be directed into a combustor, such that the combustor combusts the partially oxidized fuel and air into one or more gaseous combustion products (e.g., exhaust), that are directed into and drive a downstream turbine (see, e.g., combustor 206 and turbine 212 of the gas turbine engine system 200 of the embodiment of FIG. 2).

In one embodiment, the system 400 can be formed from one hundred fuel cells stacked side-by-side from the end or inlet side 422 to the opposite side 424. Alternatively, the system 400 can include fewer or more fuel cells stacked side-by-side. According to one embodiment, the system 400 can be eight centimeters tall, 2.5 centimeters wide, and twenty-four centimeters long. Alternatively, the system 400 can be taller or shorter, wider or narrower, and/or longer or shorter than these example dimensions.

According to one embodiment, the combination of the combustion system with an integrated fuel cell (i.e., the fuel cell and system 400) can be integrated into the liner of a combustor such that the combustor is circumferentially surrounded along some or all the length of the combustor by the housing 410 having a fuel cell stack or plurality of fuel cells. Thus, according to this embodiment, the system 400 or housing 410 directly abuts the combustor of, e.g., a gas turbine engine along the length of the combustor (see, e.g., combustor 206 of the gas turbine engine 200 of the embodiment of FIG. 2 and/or combustor 310 of the gas turbine engine 300 of the embodiment of FIG. 3). The housing 410 can form the outer surface or boundary of the combustor. This can include the housing 410 being integrally formed with the combustor. This arrangement reduces or eliminates the need to include additional ducting to fluidly couple the housing 410 with the combustor. According to another embodiment, the fuel cell stack can be axially coupled to the combustor, meaning the fuel cell stack is upstream of the combustor but not necessarily circumferentially surrounding the combustor.

According to one embodiment, the combustor is fluidly coupled with the housing 410 (see, e.g., combustor 206 of the gas turbine engine 200 of the embodiment of FIG. 2 and/or combustor 310 of the gas turbine engine 300 of the embodiment of FIG. 3). The combustor receives unspent fuel and air (e.g., combustion gas 488) from the housing 410 along radially inward directions oriented toward an annular axis of the combustor (see, e.g., exhausted fuel and air 325 from the fuel cell 320 that is directed into the combustor 310 of the gas turbine engine 300 of the embodiment of FIG. 3).

According to one embodiment, fuel cells (e.g., SOFCs) within the housing 410 are positioned to receive (i) discharged air from a compressor and/or a heat exchanger or pre-burner system as described above, and (ii) fuel from a source, such as, e.g., a catalytic partial oxidation convertor as described above. The fuel cells within the housing 410 generate electrical current using this air and at least some of this fuel, and radially direct partially oxidized fuel and unused air into the combustor. The combustor combusts the partially oxidized fuel and air into one or more gaseous combustion products (e.g., exhaust), that can be directed into and drive a downstream turbine (see, e.g., combustor 206 and turbine 212 of the gas turbine engine 200 of the embodiment of FIG. 2).

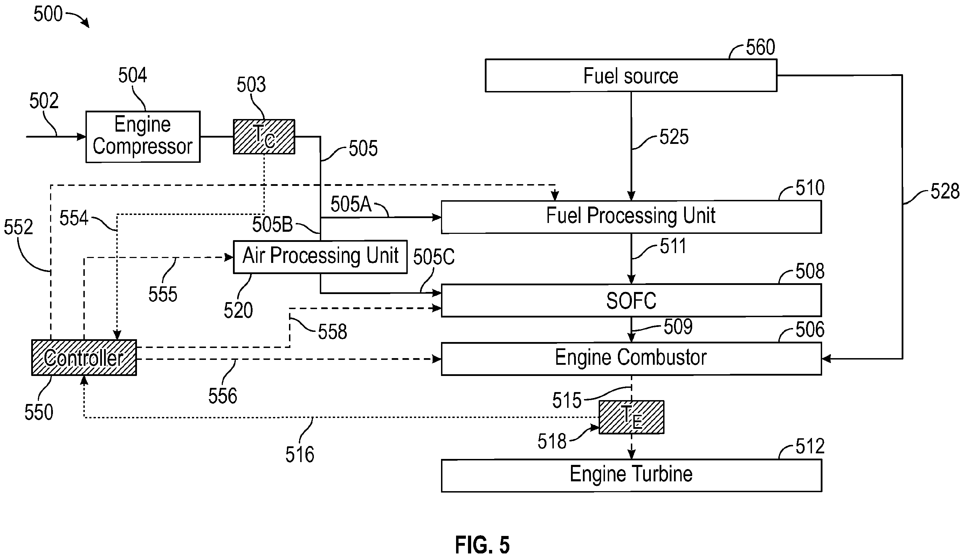

FIG. 5 illustrates a gas turbine engine 500 having a control system with a combustion system and a fuel cell according to one embodiment of the present disclosure. As shown in FIG. 5, the gas turbine engine 500 includes an engine compressor 504, a fuel cell 508 (e.g., SOFC) that is disposed (i) downstream of the engine compressor 504 and (ii) upstream and/or integrated within a liner region of an engine combustor 506, and an engine turbine 512 that is disposed downstream of the engine combustor 506. A fuel source 560 is also provided for directing a fuel stream 525 into a fuel processing unit 510 (e.g., a catalytic partial oxidation convertor) for developing a hydrogen rich fuel stream 511 to be fed into the fuel cell 508 (e.g., SOFC). The fuel source 560 can also direct another fuel stream 528 into the engine combustor 506 for the operation of a pilot/main burner (not shown) of the combustor 506 (see, e.g., pilot/main burner 315 of the embodiment of FIG. 3). The engine compressor 504 of the gas turbine engine 500 receives inlet air 502 and compresses this air via, e.g., one or more stages of rotating blades (not shown). The compressed air 505 is then directed (see, e.g., air stream 505A) into the fuel processing unit 510 (e.g., a catalytic partial oxidation convertor) for developing the hydrogen rich fuel stream 511 for the fuel cell 508 (e.g., SOFC) that is located upstream of and/or integrated with the engine combustor 506. Another portion of the compressed air 505, i.e., portion 505B, is directed into an air processing unit 520 (e.g., a heat exchanger and/or pre-burner system). The air processing unit 520 is configured to heat/cool this portion 505B of the compressed air 505 and to generate a processed air flow 505C to be directed into the fuel cell 508 (e.g., SOFC) to facilitate the functioning of the fuel cell 508. The processed air flow 505C and the hydrogen rich fuel stream 511 that are directed into the fuel cell 508 (e.g., SOFC) are at least partially converted into electrical energy. This electrical energy (e.g., current) can be used, for example, to power a load, such as a fan of the engine, a generator, or another load or used to charge a battery. Effluent 509 of the fuel cell 508 is directed into the engine combustor 506. The effluent 509 can include unused air, unburned fuel, and/or other gaseous constituents of the fuel cell 508. The effluent 509 is combusted (at least partially) in the engine combustor 506. The combustion in the engine combustor 506 generates gaseous combustion products 515 that can be directed into the engine turbine 512, to thereby drive the engine turbine 512. For example, the exhaust or gaseous combustion products 515 from the engine combustor 506 may be directed into the engine turbine 512 to rotate the engine turbine 512.

As further shown in FIG. 5, a controller 550 is included with the gas turbine engine 500 of this embodiment. The controller 550 is configured to control and/or to optimize the functioning of the various components of the gas turbine engine 500, including, for example, the fuel processing unit 510 (e.g., a catalytic partial oxidation convertor), the air processing unit 520 (e.g., a heat exchanger and/or pre-burner system), the fuel cell 508 (e.g., SOFC), and/or the engine combustor 506. In particular, as shown in the embodiment of FIG. 5, a sensor unit 503 (or another type of detecting device, such as, e.g., a virtual sensor based on first-principle physics based model or data-driven model) monitors the temperature Tc of the compressed air 505 leaving the engine compressor 504, while a sensor unit 518 (or another type of detecting device, such as, e.g., a virtual sensor based on first-principle physics based model or data-driven model) monitors the turbine inlet temperature T_{E} of the engine turbine 512. A signal 554, which is generated by the sensor unit 503 based on the detected temperature T_{C} of the compressed air 505 leaving the engine compressor 504, is sent to the controller 550, along with a signal 516, which is generated by the sensor unit 518 based on the detected turbine inlet temperature T_{E} of the engine turbine 512. These signals 516, 554 that are sent to the controller 550 impact the functioning of the various components of the gas turbine engine 500, including, for example, the fuel processing unit 510 (e.g., a catalytic partial oxidation convertor), the air processing unit 520 (e.g., a heat exchanger and/or pre-burner system), the fuel cell 508 (e.g., SOFC), and/or the engine combustor 506, via the controller 550. For example, depending upon the signal 554, which relates to the temperature Tc of the compressed air 505 leaving the engine compressor 504 that is detected by the sensor unit 503, the controller 550 may alter the functioning of the air processing unit 520 via a signal 555 and/or the fuel processing unit 510 via signal 552.

According to one embodiment, if the signal 554 indicates that the temperature T_{C} of the compressed air 505 leaving the engine compressor 504 that is detected by the sensor unit 503 is too high for the fuel cell 508 (e.g., SOFC), the controller 550 may send a signal 555 to the air processing unit 520 to remove more heat from the portion 505B of the compressed air 505 prior to directing the processed air flow 505C into the fuel cell 508. According to another embodiment, if the signal 554 indicates that the temperature T_{C} of the compressed air 505 leaving the engine compressor 504 that is detected by the sensor unit 503 is too low for the fuel cell 508 (e.g., SOFC), the controller 550 may send a signal 555 to the air processing unit 520 to add more heat to the portion 505B of the compressed air 505 prior to directing the processed air flow 505C into the fuel cell 508. The decrease and/or increase in the temperature of the compressed air 505C by cooling and/or heating the portion 505B of the compressed air 505 via the air processing unit 520 can be accomplished by decreasing and/or increasing a portion of fuel (not shown) that is directed to the air processing unit 520 for the functioning of the air processing unit 520 by the fuel processing unit 510, which can be controlled via a signal 552 sent to the fuel processing unit 510 from the controller 550. As discussed above, the compressed air 505 that is discharged from the engine compressor 504 is subject to the air temperature changes that occur at different flight stages. For example, the air within the aircraft engine compressor may work at 200°C during idle, 600°C during take-off, 450°C during cruise, etc. This type of temperature change to the air flow to be directed to the fuel cell 508 may lead to significant thermal transient issues (or even thermal shock) to the ceramic materials of the fuel cell 508 (e.g., SOFC), which could range from cracking to failure. Thus, according to embodiments of the present disclosure, the controller 550 is configured to control the functioning of the air processing unit 520 (e.g., a heat exchanger and/or pre-burner system), the fuel processing unit 510, and/or the engine combustor 506 (via signal 556), based on the temperature T_{C} of the compressed air 505 leaving the engine compressor 504 that is detected by the sensor unit 503, in order to maintain the air flow 505C being directed into the fuel cell 508 at a temperature at a desired range (e.g., 600°C to 800°C ±200°C, or preferably 750°C ±50C).

According to another embodiment, depending upon the signal 554, which relates to the temperature T_{C} of the compressed air 505 leaving the engine compressor 504 that is detected by the sensor unit 503, the controller 550 may alter the functioning of the fuel processing unit 510 (e.g., a catalytic partial oxidation convertor) via the signal 552 in order to adjust, e.g., the flow rate of the hydrogen rich fuel stream 511 being directed from the fuel processing unit 510 and into the fuel cell 508 (e.g., SOFC).

According to another embodiment, the signal 516, which relates to the turbine inlet temperature T_{E} of the engine turbine 512 that is detected by the sensor unit 518 and is sent to the controller 550, can also impact the functioning of the various components of the gas turbine engine 500, including, for example, the fuel processing unit 510 (e.g., a catalytic partial oxidation convertor), the air processing unit 520 (e.g., a heat exchanger and/or pre-burner system), the fuel cell 508 (e.g., SOFC), and/or the engine combustor 506, via the controller 550. For example, depending upon the signal 516 and, thus, the turbine inlet temperature T_{E} of the engine turbine 512, the controller 550 may alter the functioning of the fuel processing unit 510 (e.g., a catalytic partial oxidation convertor) via the signal 552 in order to adjust, e.g., the flow rate of the hydrogen rich fuel stream 511 being directed from the fuel processing unit 510 and into the fuel cell 508 (e.g., SOFC). According to an embodiment, depending upon the signal 516 and, thus, the turbine inlet temperature T_{E} of the engine turbine 512, the controller 550 may alter the functioning of the engine combustor 506 via the signal 556 in order to adjust, e.g., the flow rate of the fuel stream 528 being directed into the engine combustor 506. According to another embodiment, depending upon the signal 516 and, thus, the turbine inlet temperature T_{E} of the engine turbine 512, the controller 550 may alter the functioning of the fuel cell 508 (e.g., a SOFC) via the signal 558 in order (i) to increase the power output of the fuel cell 508 during, for example, take-off to thereby reduce the turbine inlet temperature T_{E} of the engine turbine 512, and/or (ii) to adjust the power mode of the fuel cell 508 to a maximum efficiency mode or a maximum power mode depending upon, e.g., altitude and/or flight stage, to thereby increase/decrease the turbine inlet temperature T_{E} of the engine turbine 512, as necessary. For example, according to one embodiment, the controller 550 can be configured to increase power of the fuel cell 508 (or fuel cell stack) when the turbine inlet temperature T_{E} reaches a predefined high limit region. Moreover, according to another embodiment, the power output of the fuel cell 508 (or fuel cell stack) can be (i) increased when the turbine inlet temperature T_{E} is equal to or exceeding a predefined high limit value, and/or (ii) decreased when the turbine inlet temperature T_{E} is lower than a predefined high limit value. Thus, according to embodiments of the present disclosure, the controller 550 is configured to control the functioning of the fuel cell 508 (e.g., SOFC), the fuel processing unit 510 (e.g., a catalytic partial oxidation convertor), and/or the engine combustor 506 depending upon the signal 516 (and/or the signal 554) and, thus, the turbine inlet temperature T_{E} of the engine turbine 512, which can (i) increase the lifespan of the gas turbine engine 500, (ii) reduce the size of the gas turbine engine 500, (iii) allow for high power density, (iv) improve fuel efficiency during, e.g., cruise, (v) allow for operational flexibility, and/or (vi) maintain the fuel cell (e.g., SOFC) temperature to below a thermal shock range, which allows for higher reliability and durability of the fuel cell.

According to one embodiment, the controller 550 is configured to adjust the power allocation between the engine turbine 512 and the fuel cell 508 (e.g., SOFC and/or high temperature fuel cell) in response to the turbine inlet temperature T_{E} of the engine turbine 512 and/or system status (which will be described in further detail below). According to one embodiment, the controller 550 is configured to adjust the fuel utilization, oxygen-to-fuel ratio, and/or the fuel flowrate to the fuel cell 508 and/or the engine combustor 506, in response to the turbine inlet temperature T_{E} of the engine turbine 512. According to one embodiment, the controller 550 is configured to adjust the fuel flowrate of the air processing unit 520 (e.g., pre-heater system) in response to (i) a fuel cell cathode temperature that is measured by, e.g., a fuel cell sensor (not shown) and/or (ii) a compressor air temperature (e.g., temperature T_{C} of the compressed air 505) and/or compressor pressure. According to another embodiment, the controller 550 is configured to adjust the fuel cell 508 from at least a maximum power mode to a maximum efficiency mode (and vice versa), as described in further detail below.

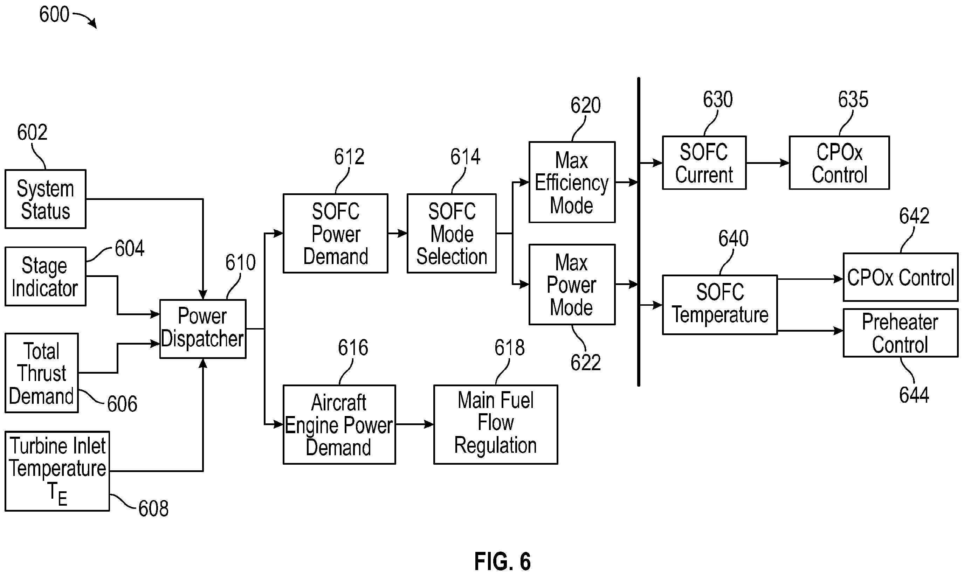

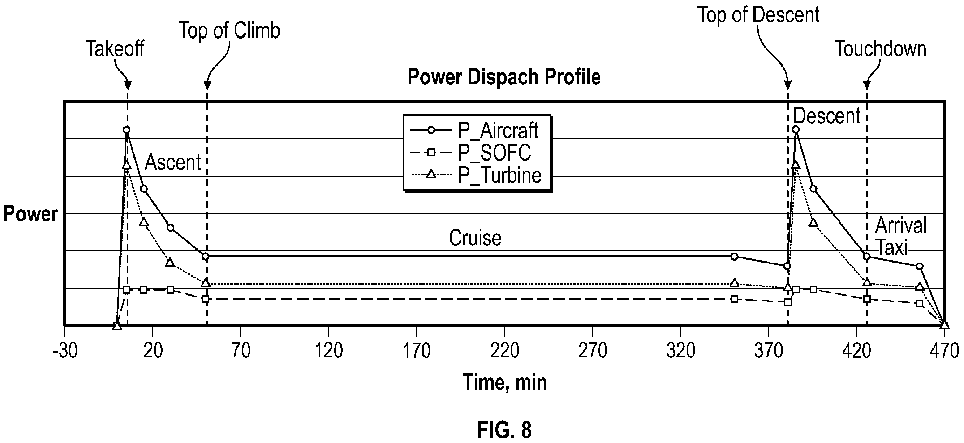

FIG. 6 illustrates a control system 600 for a gas turbine engine having a fuel cell (e.g., a hybrid engine system) according to an embodiment of the present disclosure. As shown in FIG. 6, the control system 600 includes a power dispatcher 610 that regulates and/or controls the power generated by the fuel cell (e.g., SOFC) versus the aircraft engine. In particular, the power dispatcher 610 dynamically adjusts the power allocation and/or power ratio between the fuel cell (e.g., SOFC) and the aircraft engine based on various inputs received by the power dispatcher 610, including, e.g., system status 602, stage indicator 604 (e.g., stage of flight of the aircraft), total thrust demand 606, and/or the turbine inlet temperature T_{E} of the engine turbine 608 (as discussed above). Depending upon these inputs and/or signals received by the power dispatcher 610, the power dispatcher 610 will adjust the power ratio between the fuel cell (e.g., SOFC) and the aircraft engine by adjusting (i) the power demand for the fuel cell 612 (e.g., SOFC), which relates to the amount of fuel and air being directed to the fuel cell (e.g., SOFC), and/or (ii) the power demand for the aircraft engine 616, which relates to the main fuel flow being directed to the engine. For example, the power demand for the aircraft engine 616 is adjusted by regulation of the main fuel flow 618 to the aircraft/gas turbine engine. Thus, according to one embodiment, when the power demand for the aircraft engine 616 needs to be higher due to, for example, the flight stage (see, e.g., FIG. 8), the main fuel flow to the aircraft/gas turbine engine will be increased, which generally results in a lower power demand to the fuel cell (e.g., SOFC).

As further shown in FIG. 6, the power demand for the fuel cell 612 (e.g., SOFC) is adjusted through a selection of the fuel cell (e.g., SOFC) power mode 614, which is either (i) a maximum efficiency mode 620 or (ii) a maximum power mode 622. The maximum efficiency mode 620 sets the fuel cell electrical efficiency as the top priority, which does not correspond to the maximum achievable fuel cell power, while the maximum power mode 622 sets the maximum fuel cell power as the control priority, while the fuel cell electrical efficiency may not achieve its maximum. According to another embodiment, the engine itself can be configured to function in at least one of a plurality of operation modes, the plurality of operation modes including at least (i) a maximum system power mode, (ii) a maximum system efficiency mode, and (iii) a maximum system thrust mode, such that the controller (e.g., power dispatcher 610) is configured to control the power allocation between the fuel cell (or fuel cell stack) and the engine turbine (or aircraft engine) by selecting at least one of the plurality of operation modes.

Fuel cell electrical efficiency equals the direct current (DC) power produced by the fuel cell divided by the lower heating value of the fuel feeding into the fuel cell system. Fuel cell electrical efficiency can be further broken down into three components: (i) a voltage efficiency that is the ratio of the actual cell voltage over that which is theoretically attainable, (ii) a fuel utilization efficiency that is the ratio of the fuel electrochemically used by the fuel cell over that available to the fuel cell, and (iii) a thermodynamic efficiency term that accounts for the fact that not all of the fuel's enthalpy can be converted to electrical energy. For a certain fuel cell (with chosen fuel cell materials), the efficiency is a nonlinear function of one or more components, including, e.g., the fuel composition, fuel flowrate, fuel partial pressure, anode fuel inlet temperature, air flowrate, oxygen partial pressure, cathode air inlet temperature, fuel cell solid temperature, fuel cell current and voltage, fuel cell leakage current, etc. Among those factors, the fuel utilization and fuel cell terminal voltage are generally the two most critical factors for efficiency. Usually, a high fuel cell utilization and voltage leads to a high fuel cell efficiency.

However, the maximum fuel cell efficiency does not necessarily correspond to the maximum fuel cell power. By contrast, the maximum fuel cell efficiency may lead to a low power output, and vice versa. Therefore, for a real world operation, for example, the max efficiency in this context is subject to a predefined or allowed power output range [P_{low}, P_{high}]. P_{low} represents the lowest allowed fuel cell power output and P_{high} represents the high limit of the fuel cell power. These limits could be dynamic depending on the requirement from both the aircraft system and the fuel cell itself. On the other hand, the maximum fuel cell power normally corresponds to a high current at a lower fuel cell operating voltage, which is usually not the maximum efficiency of the fuel cell system.

According to one embodiment, it should be realized that a dispatch control between the maximum efficiency and the maximum power mode can be extended to the overall aircraft system. In this case, the system efficiency is defined as the total work extracted by the fuel cell and the gas turbine engine (including both generator output and thrust) divided by the low heat value of the consumed fuel. According to this embodiment, the controller can be configured to switch between operating modes of maximum system efficiency, maximum electrical power, and maximum thrust.

Depending upon which fuel cell (e.g., SOFC) power mode is selected (e.g., maximum efficiency mode 620 or maximum power mode 622), (a) the fuel cell (e.g., SOFC) current 630 (i.e., power generation) is controlled via, for example, controlling the fuel processing unit 635 (e.g., a catalytic partial oxidation convertor) by controlling/regulating the air flow and/or fuel flow rate to/from the fuel processing unit (e.g., a catalytic partial oxidation convertor) and into the fuel cell, and/or (b) the temperature of the fuel cell 640 (e.g., SOFC) is regulated and/or controlled via, for example, (i) controlling the air flow and/or fuel flow rate to/from the fuel processing unit 642 (e.g., a catalytic partial oxidation convertor) and/or (ii) controlling the temperature of the compressed air being directed into the fuel cell through an air processing unit 644 (e.g., pre-heater system).

According to one embodiment, the selection of the maximum efficiency mode 620 and/or the maximum power mode 622 for the fuel cell (e.g., SOFC) can be dependent upon the altitude and/or flight stage of the aircraft (i.e., stage indicator 604). For example, according to one embodiment, the stage indicator 604 can include the stages of idle, take-off, ascent, top of climb, cruise, top of descent, descent, touchdown and arrival idle (see, e.g., FIG. 8). At the idle stage of the stage indicator 604, the fuel cell (e.g., SOFC) receives a startup command from the power dispatcher 610, which results in, for example, air (e.g., compressed air from the compressor) that is directed into the fuel processing unit (e.g., a catalytic partial oxidation convertor (CPOx)) and/or the fuel cell (e.g., SOFC) being heated by an air processing unit (e.g., pre-heater system). According to one embodiment, the air processing unit (e.g., pre-heater system) first introduces air (e.g., compressed air from the compressor) into the fuel cell and then fuel follows to maintain the fuel cell (e.g., the cathode of the SOFC) at an oxidized atmosphere, while the fuel processing unit (e.g., a catalytic partial oxidation convertor (CPOx)) introduces fuel first into the fuel cell and then air follows to maintain the fuel cell (e.g., the anode of the SOFC) at a reducing atmosphere. According to one embodiment, the ratio of air-to-fuel introduced into the fuel cell (e.g., SOFC) from the air processing unit (e.g., pre-heater system) and/or the fuel processing unit (e.g., a catalytic partial oxidation convertor (CPOx)) is continuously adjusted to keep a temperature rise of the fuel cell (e.g., SOFC) at a desired range (e.g., ~80°C/minute), so as to reach an operating temperature of the fuel cell (e.g., 800°C) and within a certain time frame (e.g., within ten minutes).

Thereafter, during the stages of take-off, ascent, and, up to, top of climb (see, e.g., FIG, 8), the fuel cell (e.g., SOFC) is generally maintained at the maximum power mode 622. According to this embodiment, the turbine inlet temperature T_{E} of the engine turbine 608 (as discussed above), which is normally designed to be at its maximum allowable limit at the top of climb stage, can be reduced due to (i) a reduced workload from engine and (ii) an increased power from the fuel cell (e.g., SOFC). Thus, according to embodiments of the present disclosure, a longer lifespan for the engine can be provided, as well as reduced size of engine and/or higher specific power.

During the subsequent flight stages, such as, e.g., cruise, where the turbine inlet temperature T_{E} of the engine turbine 608 (as discussed above) is less, the fuel cell (e.g., SOFC) is generally able to work at the maximum efficiency mode 620, which results in the highest voltage and the lowest fuel utilization for the fuel cell. According to one embodiment, the power delivered by the fuel cell (e.g., SOFC) is only used to serve the gap between the thrust demand 606 and the thrust being delivered by the engine. According to one embodiment, the fuel cell system (e.g., SOFC) may have a narrow operating window due to its compact design and limitation of air feed. Thus, to extend the life of the fuel cell (e.g., SOFC), a lead lag filter may be designed in the power dispatcher 610, so that the fuel cell (e.g., SOFC) only responds to a low frequency power command signal. According to another embodiment, at each operation mode of the fuel cell (e.g., SOFC), i.e., maximum efficiency mode 620 and/or maximum power mode 622, an oxygen-to-fuel ratio for the fuel processing unit (e.g., a catalytic partial oxidation convertor (CPOx)) can be maintained at a preferred ratio (e.g., -0.5) by controlling/regulating an air flow rate valve for the fuel processing unit (e.g., a catalytic partial oxidation convertor (CPOx)), in order to achieve, for example, a steady hydrogen (H₂) yield and/or a reduced environment. According to one embodiment, the exhaust temperature for the fuel processing unit (e.g., a catalytic partial oxidation convertor (CPOx)) can be maintained at a desired temperature range (e.g., ~750°C±20°C) to avoid thermal shock to the fuel cell (e.g., SOFC anode). According to yet another embodiment, the temperature of the fuel cell (e.g., SOFC) can be controlled/regulated by controlling air flow rate and/or the temperature of the air being directed into the fuel cell.

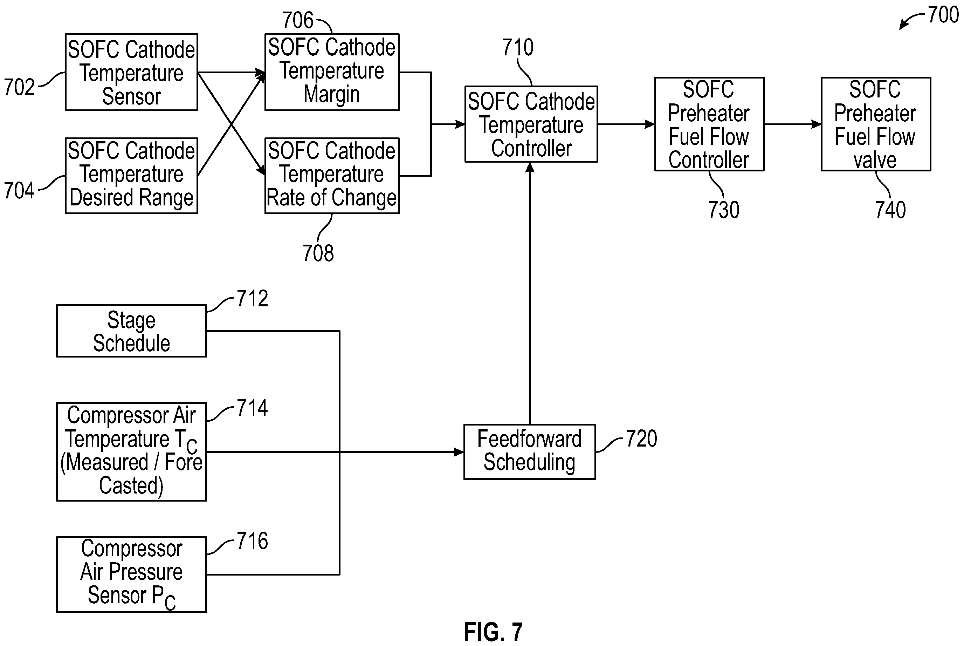

FIG. 7 illustrates a control system 700 for a fuel cell according to another embodiment of the present disclosure. According to the embodiment of FIG. 7, a fuel cell for a gas turbine engine is controlled via feedforward and/or feedback control. In particular, as shown in the embodiment of FIG. 7, feedforward and/or feedback control is achieved through feedforward scheduling 720. The feedforward scheduling 720 is created through the input of various factors, including, e.g., the stage indicator or stage schedule 712 for an aircraft (e.g., stages of idle, take-off, ascent, top of climb, cruise, top of descent, descent, touchdown and arrival idle), compressor air temperature T_{c} 714 (as described above), which can either be measured by a sensor (see, e.g., sensor 503 of FIG. 5 or another type of detecting device, such as, e.g., a virtual sensor based on first-principle physics based model or data-driven model) or forecasted with regard to historical data based upon the time, stage, and/or altitude of the flight (e.g., the compressor air temperature T_{C} is generally known to be 200°C at idle, 600°C at take-off, and 450°C at cruise, etc.), and/or compressor air pressure sensor P_{C} 716, which can also be either measured via the sensor (or another type of detecting device, such as, e.g., a virtual sensor based on first-principle physics based model or data-driven model) or forecasted with regard to historical data.

Once the various inputs (e.g., 712, 714, and 716) are received by, e.g., a controller, feedforward scheduling 720 can be generated and used to direct a fuel cell (e.g., SOFC cathode) temperature controller 710. The feedforward scheduling 720 may use a direct gain-based controller so that the control action upon temperature controller 710 can be implemented instantaneously based on the forecasted or measured or calculated compressor air temperature Tc 714. According to one embodiment, in combination with the feedforward scheduling 720, feedback information are provided to the fuel cell (e.g., SOFC cathode) temperature controller 710, including, e.g., the temperature of the fuel cell, which is measured via a fuel cell (e.g., SOFC cathode) temperature sensor 702, as well as other inputs such as, e.g., the fuel cell (e.g., SOFC cathode) temperature desired range 704, the fuel cell (e.g., SOFC cathode) temperature margin 706, and/or the fuel cell (e.g., SOFC cathode) temperature rate of change 708, which can be specified by a controller (see, e.g., controller 550 in Fig. 5). The feedback information from the inputs (702, 704, 706, and/or 708) enables a closed-loop control system for the fuel cell (e.g., SOFC cathode) inlet temperature so that the fuel cell (e.g., SOFC cathode) can always stay within the desired range specified by the fuel cell (e.g., SOFC cathode) temperature desired range 704. As shown in the embodiment of FIG. 7, the SOFC cathode temperature margin 706 is determined by the SOFC cathode temperature sensor 702 and temperature desired range 704. The SOFC cathode temperature rate of change 708 is calculated by the current value and historical value of the SOFC cathode temperature sensor 702. By feeding the various inputs (702, 704, 706, and 708) regarding the fuel cell (e.g., SOFC cathode) temperature, along with the feedforward scheduling 720, to the fuel cell (e.g., SOFC cathode) temperature controller 710, the fuel cell (e.g., SOFC cathode) temperature controller 710 will provide a signal to at least the fuel cell (e.g., SOFC) pre-heater fuel flow controller 730 to increase and/or to decrease fuel being directed to the fuel cell (e.g., SOFC) and/or the pre-heater system (e.g., air processing unit 520 of FIG. 5) by controlling a fuel cell (e.g., SOFC) pre-heater fuel flow valve 740. For example, if the various inputs (702, 704, 706, and 708) regarding the fuel cell (e.g., SOFC cathode) temperature and/or the feedforward scheduling 720 indicate that the fuel cell (e.g., SOFC cathode) temperature is too high, the fuel cell (e.g., SOFC cathode) temperature controller 710 will provide a signal to at least the fuel cell (e.g., SOFC) pre-heater fuel flow controller 730 to decrease the fuel being directed to the fuel cell (e.g., SOFC) and/or the pre-heater system (e.g., air processing unit 520 of FIG. 5) to thereby decrease the fuel cell (e.g., SOFC cathode) temperature, by control of at least the fuel cell (e.g., SOFC) pre-heater fuel flow valve 740. By contrast, if the various inputs (702, 704, 706, and 708) regarding the fuel cell (e.g., SOFC cathode) temperature and/or the feedforward scheduling 720 indicate that the fuel cell (e.g., SOFC cathode) temperature is too low, the fuel cell (e.g., SOFC cathode) temperature controller 710 will provide a signal to at least the fuel cell (e.g., SOFC) pre-heater fuel flow controller 730 to increase the fuel being directed to the fuel cell (e.g., SOFC) and/or the pre-heater system (e.g., air processing unit 520 of FIG. 5) to thereby increase the fuel cell (e.g., SOFC cathode) temperature, by control of at least the fuel cell (e.g., SOFC) pre-heater fuel flow valve 740.

FIG. 8 illustrates a graph of the power output for an aircraft according to an embodiment of the present disclosure. In particular, as shown in FIG. 8, power scheduling is illustrated between a fuel cell (e.g., SOFC)/gas turbine engine (e.g., hybrid engine) and an aircraft engine, in which peak power for the aircraft engine occurs during take-off and descent. As shown in FIG. 8, by combining the fuel cell (e.g., SOFC) with the gas turbine engine, the overall power or thrust for the gas turbine engine is reduced by, e.g., about 20%, as compared to the conventional aircraft engine at the various stages of flight (e.g., idle, take-off, ascent, top of climb, cruise, top of descent, descent, touchdown and arrival idle/taxi). Moreover, according to one embodiment, because of the reduction in the overall power or thrust for the gas turbine engine, the turbine inlet temperature T_{E} of the gas turbine engine (as discussed above) can also be reduced. Typical aircraft or gas turbine engines are designed such that the peak operational efficiency occurs when the engine is operated during one or both of take-off and/or top of climb. Thus, the typical gas turbine engine is designed for peak efficiency during take-off and/or top of climb, where the turbine inlet temperature T_{E} of the gas turbine engine is at its maximum allowable limit for best efficiency and highest thrust. Thus, in accordance with the principles of the disclosure, by reducing the turbine inlet temperature T_{E} of the gas turbine engine using the controller and/or power dispatch to the fuel cell (e.g., SOFC), a longer lifespan of the engine, a reduced size of the engine, and/or a higher power density can be achieved.

Thus, in accordance with the principles of the disclosure, a systematic way for transitional control among different flight stages of an aircraft is provided while maintaining system integrity (e.g., anode reducing, cathode oxidation, thermal gradient, etc.). In particular, combining fuel cells with engines may lead to higher efficiency and reduced fuel consumption. However, with variable altitude and operating conditions during the flight of an aircraft, which results in, e.g., a compressor discharge temperature spanning a range of 200°C to 700°C and a discharge pressure spanning a range of twenty to seventy bar, a system is needed to maintain transitional performance during flight stages subject to the disturbance of temperature and pressure fluctuation of both fuel and air. Thus, in accordance with the principles of the disclosure, a control system is provided to adjust the operating condition of the fuel cell (e.g., SOFC), which results in a reduction of the turbine inlet temperature, which leads to a longer lifespan of an engine, a reduced size of an engine, and/or a higher power density.

In accordance with the principles of the disclosure, a control arrangement is provided to adjust and/or to regulate a fuel cell (e.g., SOFC) operating condition to thereby reduce the turbine inlet temperature, which leads to a longer lifespan of the engine, a reduced size of the engine, and/or higher power density. In addition, according to aspects of the present disclosure, by operating the fuel cell (e.g., SOFC) at different modes (e.g., maximum power vs. maximum efficiency) based on the altitude of the aircraft, fuel efficiency can be further improved.

Thus, in accordance with the principles of the disclosure, a hybrid (or dispatch) control system for an aircraft powered by a fuel cell (e.g., SOFC) in combination with a gas turbine engine is provided. Moreover, in accordance with the principles of the disclosure, a hybrid (or dispatch) control system is provided for a gas turbine engine that includes a fuel cell in order to meet the total thrust demand of an aircraft engine, by regulating the power between the fuel cell (e.g., SOFC) and the engine. According to one embodiment, the power for the fuel cell (e.g., SOFC) regulates fuel (e.g., ethanol) flowrate to a fuel processing unit (e.g., a catalytic partial oxidation convertor (CPOx)), while the engine power regulates main fuel flow. Thus, in accordance with the principles of the disclosure, a power dispatcher is provided that dynamically adjusts the power ratio between the fuel cell (e.g., SOFC) and the engine based on, e.g., thrust error between demand and feedback, stage indicator, and/or dynamic response characteristic of the fuel cell (e.g., SOFC) and the engine.

According to one embodiment of the present disclosure, based on the stage indicator (such as, e.g., idle, take-off, cruise, etc.), the fuel cell (e.g., SOFC) works at either a maximum power mode or a maximum efficiency mode.

According to one embodiment of the present disclosure, a hybrid controller is provided that adjusts the fuel cell from at least a maximum power mode to a maximum efficiency mode at different altitudes.

According to one embodiment of the present disclosure, a hybrid controller is provided that adjusts a preheater fuel flowrate in response to a fuel cell cathode temperature sensor and a compressor exit air temperature.

According to one embodiment of the present disclosure, a power dispatch controller for a gas turbine engine having a fuel cell (e.g., SOFC) is provided to adjust subsystem parameters of the fuel cell, such as, e.g., fuel utilization, oxygen-to-fuel ratio, and/or fuel flowrate to the fuel cell, in response to, for example, the turbine inlet temperature T_{E} of the engine turbine.

According to one embodiment of the present disclosure, a power dispatch controller for a fuel cell (e.g., SOFC) is provided that allows for a reduced overall power or thrust for the aircraft gas turbine engine by, for example, about 20%, in combination with a lower turbine inlet temperature T_{E} of the gas turbine engine (as discussed above). By reducing the turbine inlet temperature T_{E} of the gas turbine engine with the power dispatch controller for the fuel cell (e.g., SOFC), a longer lifespan for the engine, a reduced size for the engine, and/or a higher power density can be achieved.

According to one embodiment of the present disclosure, a fuel cell is at least one of a solid oxide fuel cell (SOFC) and a molten carbonate fuel cell (MCFC).

According to one embodiment of the present disclosure, a system is provided that maintains accurate H₂ fuel for fuel cell (e.g., SOFC) power even with an air flow fluctuation to the fuel processing unit (e.g., a catalytic partial oxidation convertor (CPOx)).

In accordance with the principles of the disclosure, during phase or stage transition of an aircraft in which the air temperature (e.g., temperature T_{C} of compressed air leaving the engine compressor) changes in the range of 200°C to 600°C, the fuel flow to an air processing unit (e.g., pre-heater system) can be adjusted to ensure the temperature of the fuel cell (e.g., cathode temperature) is close to an operating temperature (e.g., around 700°C).

In accordance with the principles of the disclosure, system efficiency is improved for an aircraft powered by a fuel cell (e.g., SOFC) in combination with a gas turbine engine by introducing fuel cell (e.g., SOFC) power allocation.

In accordance with the principles of the disclosure, steady state and/or transient operation is enabled for a solid oxide fuel cell (SOFC) as a topping cycle with a brayton cycle gas turbine engine being the bottoming cycle.

Further aspects of the present disclosure are provided by the subject matter of the following clauses.

An engine assembly comprising: a combustor, a fuel cell stack fluidly connected to the combustor, the fuel cell stack being configured (i) to generate power using fuel and air directed into the fuel cell stack and (ii) to direct fuel and air exhaust from the fuel cell stack into the combustor, a compressor that is fluidly connected upstream of (i) the combustor and (ii) the fuel cell stack, wherein the compressor is configured to generate compressed air and to direct a portion of the compressed air into the fuel cell stack, a turbine disposed downstream from the combustor, the turbine having a turbine inlet temperature, wherein the combustor is configured to combust the fuel and air exhaust from the fuel cell stack into one or more gaseous combustion products that power the turbine, and a controller that is configured to control a power allocation between the fuel cell stack and the turbine based upon the turbine inlet temperature of the turbine.

The engine assembly of any preceding clause, further comprising a fuel processing unit that is fluidly connected to the fuel cell stack, wherein the fuel processing unit is configured to develop a hydrogen rich fuel stream to be directed into the fuel cell stack, and a fuel source that is fluidly connected to the fuel processing unit, wherein a portion of fuel is directed from the fuel source to the fuel processing unit for developing the hydrogen rich fuel stream.

The engine assembly of any preceding clause, wherein the controller is further configured to control the fuel processing unit based upon the turbine inlet temperature of the turbine.

The engine assembly of any preceding clause, further comprising at least one compressor sensor configured to detect at least one of a temperature and a pressure of the compressed air.

The engine assembly of any preceding clause, further comprising an air processing unit fluidly connected to the fuel cell stack, the air processing unit being configured to control a temperature of the portion of the compressed air directed into the fuel cell stack from the compressor.

The engine assembly of any preceding clause, further comprising a fuel source that is fluidly connected to the air processing unit, wherein a portion of fuel is directed from the fuel source to the air processing unit to regulate the temperature of the portion of the compressed air directed into the fuel cell stack from the compressor.

The engine assembly of any preceding clause, wherein the controller is further configured to control the air processing unit based upon the temperature of the compressed air detected by the at least one compressor sensor.

The engine assembly of any preceding clause, wherein the controller controls the air processing unit by adjusting a flowrate of the portion of fuel that is directed from the fuel source to the air processing unit based upon the temperature of the compressed air detected by the at least one compressor sensor.

The engine assembly of any preceding clause, wherein the air processing unit comprises at least one of a heat exchanger and a pre-burner system.

The engine assembly of any preceding clause, wherein the fuel cell stack is at least one of (i) disposed upstream of the combustor and (ii) integrated within at least one of an inner liner and an outer liner of the combustor.

The engine assembly of any preceding clause, wherein the fuel cell stack is configured to function in at least two power modes, the at least two power modes including (i) a maximum power mode and (ii) a maximum efficiency mode, and wherein the controller is configured to control the power allocation between the fuel cell stack and the turbine by selecting one of (i) the maximum power mode and (ii) the maximum efficiency mode for the fuel cell stack.

The engine assembly of any preceding clause, wherein the engine assembly is configured for use within an aircraft, and wherein the controller is configured to maintain the fuel cell stack at the maximum power mode during stages of take-off, ascent, and up to top of climb during a flight of the aircraft.

The engine assembly of any preceding clause, wherein the engine assembly is configured for use within an aircraft, and wherein the controller is configured to increase power of the fuel cell stack when the turbine inlet temperature reaches a predefined high limit region.

The engine assembly of any preceding clause, wherein the controller is configured to control the power allocation between the fuel cell stack and the turbine by regulating a flow of fuel to the turbine.

The engine assembly of any preceding clause, wherein the engine assembly is configured to function in at least one of a plurality of operation modes, the plurality of operation modes including at least (i) a maximum system power mode, (ii) a maximum system efficiency mode, and (iii) a maximum system thrust mode.

The engine assembly of any preceding clause, wherein the controller is configured to control the power allocation between the fuel cell stack and the turbine by selecting at least one of the plurality of operation modes.

The engine assembly of any preceding clause, wherein the fuel cell stack generates a current and the fuel cell stack has a temperature, such that at least one of (a) the fuel cell current and (b) the fuel cell temperature is controlled based upon a selection of one of (i) the maximum power mode and (ii) the maximum efficiency mode for the fuel cell stack.

The engine assembly of any preceding clause, wherein the controller receives one or more inputs based upon at least one of a system status, a stage indicator for a flight, and a total thrust demand, and wherein the controller is further configured to control the power allocation between the fuel cell stack and the turbine based upon at least one of the one or more inputs.

The engine assembly of any preceding clause, further comprising a sensor configured to detect the turbine inlet temperature of the turbine.

The engine assembly of any preceding clause, wherein the controller receives historical data relating to at least one of a time, an altitude, and a stage of a flight, and wherein the turbine inlet temperature of the turbine is forecast based upon the historical data.

The engine assembly of any preceding clause, wherein the fuel cell stack is one of a solid oxide fuel cell stack and a molten carbonate fuel cell stack.

A method of controlling an engine assembly, the method comprising: providing an engine assembly comprising a combustor, a fuel cell stack fluidly connected to the combustor, a compressor fluidly connected to the fuel cell stack, and a turbine, determining a turbine inlet temperature of the turbine, providing the determined turbine inlet temperature of the turbine to a controller, and controlling, via the controller, a power allocation between the fuel cell stack and the turbine based upon the turbine inlet temperature of the turbine.

The method of any preceding clause, wherein the engine assembly further comprises a fuel processing unit that is fluidly connected to the fuel cell stack, wherein the fuel processing unit is configured to develop a hydrogen rich fuel stream to be directed into the fuel cell stack.

The method of any preceding clause, further comprising controlling, via the controller, the fuel processing unit based upon the turbine inlet temperature of the turbine.

The method of any preceding clause, wherein the compressor is configured to generate compressed air and to direct a portion of the compressed air into the fuel cell stack, and wherein the method further comprises determining at least one of a temperature and a pressure of the compressed air.

The method of any preceding clause, wherein the at least one of a temperature and a pressure of the compressed air is determined by a sensor.

The method of any preceding clause, further comprising collecting historical data relating to at least one of a time, an altitude, and a stage of a flight, such that the at least one of a temperature and a pressure of the compressed air is determined by a forecast based upon the historical data.

The method of any preceding clause, wherein the engine assembly further comprises an air processing unit fluidly connected to the fuel cell stack, the air processing unit being configured to control a temperature of the portion of the compressed air directed into the fuel cell stack from the compressor.

The method of any preceding clause, further comprising controlling, via the controller, the air processing unit based upon at least one of the temperature and the pressure of the compressed air.

The method of any preceding clause, wherein the controlling, via the controller, the air processing unit is conducted by adjusting a flowrate of a portion of fuel that is directed to the air processing unit based upon the at least one of the temperature and the pressure of the compressed air.

The method of any preceding clause, wherein the fuel cell stack is configured to function in at least two power modes, the at least two power modes including (i) a maximum power mode and (ii) a maximum efficiency mode, and wherein the controlling, via the controller, the power allocation between the fuel cell stack and the turbine is conducted by selecting one of (i) the maximum power mode and (ii) the maximum efficiency mode for the fuel cell stack.

The method of any preceding clause, wherein the engine assembly is configured for use within an aircraft, and the method further comprises maintaining, via the controller, the fuel cell stack at the maximum power mode during stages of take-off, ascent, and up to top of climb during a flight of the aircraft.

The method of any preceding clause, wherein the controlling, via the controller, the power allocation between the fuel cell stack and the turbine is conducted by regulating a flow of fuel to the turbine.

The method of any preceding clause, wherein the fuel cell stack generates a current and the fuel cell stack has a temperature, such that the method further comprises controlling at least one of (a) the fuel cell current and (b) the fuel cell temperature based upon a selection of one of (i) the maximum power mode and (ii) the maximum efficiency mode for the fuel cell stack.

The method of any preceding clause, further comprising receiving, at the controller, one or more inputs based upon at least one of a system status, a stage indicator for a flight, and a total thrust demand, such that the controlling, via the controller, the power allocation between the fuel cell stack and the turbine is based upon at least one of the one or more inputs.

The method of any preceding clause, wherein the turbine inlet temperature of the turbine is measured by a sensor.

The method of any preceding clause, further comprising receiving, at the controller, historical data relating to at least one of a time, an altitude, and a stage of a flight, such that the turbine inlet temperature of the turbine is forecast based upon the historical data.

The method of any preceding clause, further comprising controlling a temperature of the fuel cell stack.

The method of any preceding clause, wherein the engine assembly is configured for use within an aircraft, and wherein the controlling a temperature of the fuel cell stack is conducted by providing a feedforward scheduling related to at least one of (i) a stage schedule of a flight of the aircraft, (ii) one of a measured and a forecasted temperature of compressed air to be directed into the fuel cell stack, and (iii) an air pressure of compressed air to be directed into the fuel cell stack.

The method of any preceding clause, wherein the controlling a temperature of the fuel cell stack is conducted by controlling a temperature of compressed air directed into the fuel cell stack from the compressor.

The method of any preceding clause, further comprising providing a pre-heater system for the controlling a temperature of compressed air directed into the fuel cell stack from the compressor.

The method of any preceding clause, further comprising controlling a fuel flow directed into the pre-heater system via a fuel flow valve for the controlling a temperature of compressed air directed into the fuel cell stack from the compressor.

An engine assembly comprising: a combustor, a fuel cell stack fluidly connected to the combustor, the fuel cell stack being configured (i) to generate power using fuel and air directed into the fuel cell stack and (ii) to direct fuel and air exhaust from the fuel cell stack into the combustor, a compressor that is fluidly connected upstream of (i) the combustor and (ii) the fuel cell stack, wherein the compressor is configured to generate compressed air and to direct a portion of the compressed air into the fuel cell stack, a turbine disposed downstream from the combustor, the turbine having a turbine inlet temperature, wherein the combustor is configured to combust the fuel and air exhaust from the fuel cell stack into one or more gaseous combustion products that power the turbine, and a controller that is configured to regulate a power output of the fuel cell stack based upon the turbine inlet temperature of the turbine.

The engine assembly of any preceding clause, wherein the power output of the fuel cell stack is increased when the turbine inlet temperature is equal to or exceeding a predefined high limit value.

The engine assembly of any preceding clause, wherein the power output of the fuel cell stack is decreased when the turbine inlet temperature is lower than a predefined high limit value.

The engine assembly of any preceding clause, wherein the power output of the fuel cell stack is adjusted by at least one of fuel utilization, oxygen-to-fuel ratio of a fuel processing unit, a total fuel flow rate, and a temperature of the fuel cell stack

Although the foregoing description is directed to the preferred embodiments, it is noted that other variations and modifications will be apparent to those skilled in the art, and may be made without departing from the spirit or scope of the disclosure. Moreover, features described in connection with one embodiment may be used in conjunction with other embodiments, even if not explicitly stated above.

## Claims

1. An engine assembly (100, 200, 300, 500) comprising:
(a) a combustor (106, 206, 310, 506);
(b) a fuel cell stack (108, 208, 320, 508) fluidly connected to the combustor (106, 206, 310, 506), the fuel cell stack (108, 208, 320, 508) being configured (i) to generate power using fuel and air directed into the fuel cell stack (108, 208, 320, 508) and (ii) to direct fuel and air exhaust (325, 509) from the fuel cell stack (108, 208, 320, 508) into the combustor (106, 206, 310, 506);
(c) a compressor (104, 204, 312, 504) that is fluidly connected upstream of (i) the combustor (106, 206, 310, 506) and (ii) the fuel cell stack (108, 208, 320, 508), wherein the compressor (104, 204, 312, 504) is configured to generate compressed air (128, 228, 340, 505) and to direct a portion of the compressed air (128, 228, 340, 505) into the fuel cell stack (108, 208, 320, 508);
(d) a turbine (112, 212, 512) disposed downstream from the combustor (106, 206, 310, 506), the turbine (112, 212, 512) having a turbine inlet temperature (T_{E}), wherein the combustor (106, 206, 310, 506) is configured to combust the fuel and air exhaust (325, 509) from the fuel cell stack (108, 208, 320, 508) into one or more gaseous combustion products (515) that power the turbine (112, 212, 512); and
(e) a controller (550) that is configured to control a power allocation between the fuel cell stack (108, 208, 320, 508) and the turbine (112, 212, 512) based upon the turbine inlet temperature (T_{E}) of the turbine (112, 212, 512).

2. The engine assembly of claim 1, further comprising:
(i) a fuel processing unit (110, 210, 330, 510) that is fluidly connected to the fuel cell stack (108, 208, 320, 508), wherein the fuel processing unit (110, 210, 330, 510) is configured to develop a hydrogen rich fuel stream (111, 211, 335, 511) to be directed into the fuel cell stack (108, 208, 320, 508); and
(ii) a fuel source (120, 220, 350, 560) that is fluidly connected to the fuel processing unit (110, 210, 330, 510), wherein a portion of fuel is directed from the fuel source (120, 220, 350, 560) to the fuel processing unit (110, 210, 330, 510) for developing the hydrogen rich fuel stream (111, 211, 335, 511).

3. The engine assembly of any preceding claim, wherein (i) the controller (550) is further configured to control the fuel processing unit (110, 210, 330, 510) based upon the turbine inlet temperature (T_{E}) of the turbine (112, 212, 512), and/or (ii) the controller (550) is configured to control the power allocation between the fuel cell stack (108, 208, 320, 508) and the turbine (112, 212, 512) by regulating a flow of fuel to the turbine (112, 212, 512).

4. The engine assembly of any preceding claim, further comprising at least one compressor sensor (503) configured to detect at least one of a temperature (Tc) and a pressure (Pc) of the compressed air (128, 228, 340, 505), and, optionally, further comprising (i) an air processing unit (520) fluidly connected to the fuel cell stack (108, 208, 320, 508), the air processing unit being (520) configured to control a temperature of the portion of the compressed air (128, 228, 340, 505) directed into the fuel cell stack (108, 208, 320, 508) from the compressor (104, 204, 312, 504); and (ii) a fuel source (560) that is fluidly connected to the air processing unit (520), wherein a portion of fuel is directed from the fuel source (560) to the air processing unit (520) to regulate the temperature of the portion of the compressed air (128, 228, 340, 505) directed into the fuel cell stack (108, 208, 320, 508) from the compressor (104, 204, 312, 504).

5. The engine assembly of claim 4, wherein the controller (550) is further configured to control the air processing unit (520) based upon the temperature (Tc) of the compressed air (128, 228, 340, 505) detected by the at least one compressor sensor (503), and, optionally, wherein the controller (550) controls the air processing unit (520) by adjusting a flowrate of the portion of fuel that is directed from the fuel source (560) to the air processing unit (520) based upon the temperature (Tc) of the compressed air (128, 228, 340, 505) detected by the at least one compressor sensor (503), and, optionally, wherein the air processing unit (520) comprises at least one of a heat exchanger and a pre-burner system.

6. The engine assembly of any preceding claim, wherein the fuel cell stack (108, 208, 320, 508) is at least one of (i) disposed upstream of the combustor (106, 206, 310, 506) and (ii) integrated within at least one of an inner liner and an outer liner of the combustor (106, 206, 310, 506).

7. The engine assembly of any preceding claim, wherein the fuel cell stack (108, 208, 320, 508) is configured to function in at least two power modes, the at least two power modes including (i) a maximum power mode and (ii) a maximum efficiency mode, and, optionally, wherein the controller (550) is configured to control the power allocation between the fuel cell stack (108, 208, 320, 508) and the turbine (112, 212, 512) by selecting one of (i) the maximum power mode and (ii) the maximum efficiency mode for the fuel cell stack (108, 208, 320, 508), and, optionally, wherein the fuel cell stack (108, 208, 320, 508) generates a current and the fuel cell stack (108, 208, 320, 508) has a temperature, such that at least one of (a) the fuel cell current and (b) the fuel cell temperature is controlled based upon a selection of one of (i) the maximum power mode and (ii) the maximum efficiency mode for the fuel cell stack (108, 208, 320, 508).

8. The engine assembly of claim 7, wherein the engine assembly (100, 200, 300, 500) is configured for use within an aircraft, and wherein the controller (550) is configured to maintain the fuel cell stack (108, 208, 320, 508) at the maximum power mode during stages of take-off, ascent, and up to top of climb during a flight of the aircraft.

9. The engine assembly of any preceding claim, wherein the engine assembly (100, 200, 300, 500) is configured for use within an aircraft, and wherein the controller (550) is configured to increase power of the fuel cell stack (108, 208, 320, 508) when the turbine inlet temperature (T_{E}) reaches a predefined high limit region.

10. The engine assembly of any preceding claim, wherein the engine assembly (100, 200, 300, 500) is configured to function in at least one of a plurality of operation modes, the plurality of operation modes including at least (i) a maximum system power mode, (ii) a maximum system efficiency mode, and (iii) a maximum system thrust mode, and wherein the controller (550) is configured to control the power allocation between the fuel cell stack (108, 208, 320, 508) and the turbine (112, 212, 512) by selecting at least one of the plurality of operation modes.

11. The engine assembly of any preceding claim, wherein the controller (550) receives one or more inputs based upon at least one of a system status, a stage indicator for a flight, and a total thrust demand, and wherein the controller (550) is further configured to control the power allocation between the fuel cell stack (108, 208, 320, 508) and the turbine (112, 212, 512) based upon at least one of the one or more inputs.

12. The engine assembly of any preceding claim, wherein at least one of (i) the engine assembly (100, 200, 300, 500) further comprises a sensor (518) configured to detect the turbine inlet temperature (T_{E}) of the turbine (112, 212, 512), and (ii) the controller (550) receives historical data relating to at least one of a time, an altitude, and a stage of a flight, such that the turbine inlet temperature (T_{E}) of the turbine (112, 212, 512) is forecast based upon the historical data.

13. An engine assembly (100, 200, 300, 500) comprising:
(a) a combustor (106, 206, 310, 506);
(b) a fuel cell stack (108, 208, 320, 508) fluidly connected to the combustor (106, 206, 310, 506), the fuel cell stack (108, 208, 320, 508) being configured (i) to generate power using fuel and air directed into the fuel cell stack (108, 208, 320, 508) and (ii) to direct fuel and air exhaust (325, 509) from the fuel cell stack (108, 208, 320, 508) into the combustor (106, 206, 310, 506);
(c) a compressor (104, 204, 312, 504) that is fluidly connected upstream of (i) the combustor (106, 206, 310, 506) and (ii) the fuel cell stack (108, 208, 320, 508), wherein the compressor (104, 204, 312, 504) is configured to generate compressed air (128, 228, 340, 505) and to direct a portion of the compressed air (128, 228, 340, 505) into the fuel cell stack (108, 208, 320, 508);
(d) a turbine (112, 212, 512) disposed downstream from the combustor (106, 206, 310, 506), the turbine (112, 212, 512) having a turbine inlet temperature (T_{E}), wherein the combustor (106, 206, 310, 506) is configured to combust the fuel and air exhaust (325, 509) from the fuel cell stack (108, 208, 320, 508) into one or more gaseous combustion products (515) that power the turbine (112, 212, 512); and
(e) a controller (550) that is configured to regulate a power output of the fuel cell stack (108, 208, 320, 508) based upon the turbine inlet temperature (T_{E}) of the turbine (112, 212, 512).

14. The engine assembly of claim 13, wherein the power output of the fuel cell stack (108, 208, 320, 508) is one of (i) increased when the turbine inlet temperature (T_{E}) is equal to or exceeding a predefined high limit value, and (ii) decreased when the turbine inlet temperature (T_{E}) is lower than a predefined high limit value.

15. The engine assembly of any preceding claim, wherein the power output of the fuel cell stack (108, 208, 320, 508) is adjusted by at least one of fuel utilization, oxygen-to-fuel ratio of a fuel processing unit (110, 210, 330, 510), a total fuel flow rate, and a temperature of the fuel cell stack (108, 208, 320, 508).
